# EUROPÄISCHE PATENTSCHRIFT

(11) **EP 3 494 022 B1**
(45) Veröffentlichungstag und Bekanntmachung des Hinweises auf die Patenterteilung: **07.10.2020**
(21) Anmeldenummer: 17758030.5
(22) Anmeldetag: 28.07.2017
(51) Int. Cl.: B61D 17/22

(54) **AUS MEHREREN GELENKIG MITEINANDER VERBUNDENEN FAHRZEUGEN ODER FAHRZEUGTEILEN AUSGEBILDETES GELENKFAHRZEUG, ZUM BEISPIEL EIN SCHIENENFAHRZEUG ODER EIN GELENKBUS**
ARTICULATED VEHICLE, FOR EXAMPLE A RAIL VEHICLE OR AN ARTICULATED BUS, FORMED FROM A PLURALITY OF VEHICLES OR VEHICLE PARTS CONNECTED TO ONE ANOTHER IN AN ARTICULATED MANNER
VÉHICULE ARTICULÉ COMPOSÉ DE PLUSIEURS VÉHICULES OU PARTIES DE VÉHICULE RELIÉS DE FAÇON ARTICULÉE, PAR EXEMPLE VÉHICULE FERROVIAIRE OU BUS ARTICULÉ

(30) Priorität: 03.08.2016 DE 102016114355
(43) Veröffentlichungstag der Anmeldung: 12.06.2019
(73) Patentinhaber: Hübner GmbH & Co. KG, 34123 Kassel (DE)
(72) Erfinder: ANDREAS, Kunze, 34132 Kassel (DE)
(74) Vertreter: Patentanwälte Walther Hinz Bayer PartGmbB
(86) Internationale Anmeldenummer: PCT/DE2017/100633
(87) Internationale Veröffentlichungsnummer: WO 2018/024289

(56) Entgegenhaltungen:
- EP-A1- 2 082 942
- FR-A1- 2 333 657
- US-A- 3 410 226
- US-A- 4 599 947

## Beschreibung

Die Erfindung betrifft ein aus mehreren gelenkig miteinander verbundenen Fahrzeugen oder Fahrzeugteilen ausgebildetes Gelenkfahrzeug, zum Beispiel ein Schienenfahrzeug oder einen Gelenkbus, wobei zwischen den Fahrzeugen oder Fahrzeugteilen ein Übergang angeordnet ist, wobei der Übergang eine Innen- sowie mit seitlichem Abstand dazu eine Außenverkleidung aufweist, wobei Innen- und Außenverkleidung unter Bildung des Abstandes zueinander an den Stirnwänden zweier benachbarter Fahrzeuge oder Fahrzeugteile angeordnet sind.

Sowohl bei Schienenfahrzeugen als auch bei Straßenfahrzeugen, beispielsweise einem Gelenkbus, ist zwischen zwei Fahrzeugteilen oder Fahrzeugen, die gelenkig miteinander verbunden sind, ein Übergang vorgesehen. Ein solcher Übergang umfasst im Einzeinen einen Balg, der eine Übergangseinrichtung, zum Beispiel eine Plattform oder eine Brücke, tunnelförmig umspannt.

In diesem Zusammenhang sind Übergänge bekannt, bei denen nicht nur ein Balg vorgesehen ist, der sich zwischen den Stirnwänden der Wagenkästen der beiden gelenkig miteinander verbundenen Fahrzeuge oder Fahrzeugteile erstreckt, sondern vielmehr gibt es Ausführungsformen, bei der zwei radial oder seitlich beabstandet zueinander angeordnete Bälge vorgesehen sind, wie das beispielhaft aus der EP 2 335 995 B1 bekannt ist. Wie bereits ausgeführt sind die Bälge seitlich oder radial beabstandet zueinander an den Stirnwänden der Wagenkästen der einander gegenüber liegenden Fahrzeugteile angeordnet, das heißt, es besteht auf der Stirnwand ein Freiraum zwischen dem inneren Balg und dem äußeren Balg. Solche Übergänge mit zwei ineinander gelagerten Bälgen werden u.a. zu Zwecken der Geräuschdämmung eingesetzt, insbesondere im Schienenverkehr bei schnellfahrenden Zügen, beispielsweise dem ICE.

Die Anforderungen an den Schallschutz sind allerdings im Laufe der Zeit immer weiter erhöht worden. So wurde insbesondere auch versucht, durch Dämmung des Bodenbereichs des Übergangs erhöhte Schalldammwerte zu verwirklichen. Allerdings genügten die erreichten Schalldämmwerte noch nicht den gestellten Anforderungen.

Insbesondere die Balgmaterialien wurden mit dem Ziel der erhöhten Schalldämmung weiter entwickelt, indem das Balgmaterial mit einem Dämmmaterial versehen wurde. Dies führte jedoch zu dickeren, schwereren und auch teureren Bälgen. Darüber hinaus sind aus der DE 198 21 083 B1 schallgedämmte Bälge bekannt, bei denen einander überlappende Laschen an der Innenseite der wellenförmigen Balgelemente eines Wellenbalges angebracht sind.

Auch ist bekannt, in den Zwischenraum eines Übergangsschutzes zwischen Innen- und Außenabdeckung schalldämmende Materialien einzubauen, wie dies in der DE 10 57 639 A beschrieben ist. Insbesondere eine solche Maßnahme ist geeignet, um die Beweglichkeit des Übergangsschutzes bei Nick-, Knick-, Wank- oder Versatzbewegungen einzuschränken, also der Übergangsschutz dann möglicherweise nicht mehr den dynamischen Anforderungen genügt.

Die der Erfindung zugrunde liegende Aufgabe besteht insofern darin, bei einem Gelenkfahrzeug der eingangs genannten Art mit einfachen und preiswerten Mitteln eine Verminderung des im Übergang gemessenen Schallwertes zu erreichen.

Zur Lösung der Aufgabe wird erfindungsgemäß vorgeschlagen, dass auf der durch den Abstand auf der Stirnwand gebildeten Freifläche eine schallabsorbierende Schalldämmschicht aufbringbar ist. Die Freifläche wird hierbei durch den seitlichen Abstand zwischen der Innen- und der Außenverkleidung auf der Stirnwand des jeweiligen Wagenkastens der gelenkig miteinander verbundenen Fahrzeuge gebildet. Vorteilhaft ist insbesondere, wenn zwischen den verbundenen Fahrzeugen oder Fahrzeugteilen auf zusätzliche schalldämmende und/oder schallabsorbierende Materialien in dem Raum zwischen innen- und Außenverkleidung des Übergangs verzichtet werden kann bzw. keine solchen Materialien dort angeordnet sind, also bei der Verwirklichung der Erfindung keine Einschränkungen in Bezug auf die Beweglichkeit beispielsweise eines Doppelwellenbalges zu befürchten sind. Versorgungsschläuche oder Leitungen, die zwischen Außen- und Innenverkleidung zwischen den gelenkig miteinander verbundenen Fahrzeugen geführt sind, sind in diesem Zusammenhang keine Schallschutzmittel.

Das heißt, dass durch Aufbringung einer Schalldämmschicht auf der Stirnwand der Schalldruck im Raum zwischen Außen- und Innenverkleidung, insbesondere zwischen Außen- und Innenbalg, durch Schallabsorption vermindert wird, ohne dass an der Verkleidung, und hier insbesondere an den Bälgen, irgendwelche schalldämmenden Maßnahmen zur Verminderung der Transmission des Schalls in das Innere des Übergangs getroffen werden müssen, die die Beweglichkeit der Bälge beeinträchtigen.

Die Schalldämmschicht kann hierbei insbesondere als Vlies, Schaumstoff oder ähnliches, schallabsorbierend ausgebildet sind, wobei sich insbesondere die Verwendung von Dämmaterial mit geringem spezifischen Eigengewicht als vorteilhaft herausgestellt hat, denn durch ein derartiges schallabsorbierendes Dämmmaterial kann eine signifikante Reduzierung des Schalldruckes in dem Raum zwischen der Außen- und der Innenverkleidung des Übergangs erreicht werden. Das heißt, es liegt dann auch ein geringerer Schalldruck an der innenverkleidung an, was unmittelbar dazu führt, dass auch der Schalldruck im Inneren des Übergangs deutlich reduziert wird.

So wird bereits eine erhebliche Reduzierung des Schalldrucks im Inneren des Übergangs erreicht, wenn eine ca, 5 cm starke Dämmung auf eine ca. 8 bis 10 cm breite Freifläche zwischen der Innen- und der Außenverkleidung aufgebracht wird, Die Freifläche erstreckt sich hierbei entsprechend der Kontur der Außen- und Innenverkleidung U-förmig an der Stirnwand des jeweiligen Wagenkastens der beiden gelenkig miteinander verbundenen Fahrzeuge bzw. Fahrzeugteile. Vorteilhaft ist die komplette Freifläche mit einer Dämmschicht versehen, Es kann aber auch ausreichend sein, Teilflächen der Freifläche mit einer Schalldämmschicht zu belegen.

Die Verbindung der insbesondere mattenartigen Schalldämmschicht mit der Stirnwand erfolgt durch Verkleben, Verschrauben oder durch Nieten.

Die Außen- und/oder Innenverkleidung sind hierbei vorteilhaft als Balg, zum Beispiel als Wellenbalg, ausgebildet. Einsetzbar ist die Erfindung aber grundsätzlich bei jeder Art einer Innen- und Außenverkleidung, also zum Beispiel bei einer innen- oder Außenverkleidung, die aus einem elastischen, beschichteten Gewebe ausgebildet ist oder einer innenverkleidung in der Art mindestens einer biegsamen und/oder aufrollbaren Seitenwand, oder auch einer entsprechenden Deckenverkleidung,

Die Außen- und die Innenverkleidung sind durch Befestigungsmittel, vorteilhaft durch jeweils einen Anschraubrahmen mit der Stirnwand des jeweiligen Fahrzeugs oder Fahrzeugteils verbunden. In diesem Zusammenhang ergibt sich die Option, dann, wenn die Schalldämmschicht auf einer Trägerplatte, zum Beispiel aus Metall, angebracht ist, diese gemeinsam mit mindestens einem, vorzugsweise beiden Anschraubrahmen an der entsprechenden Stirnwand zu befestigen, zum Beispiel durch Verschraubung, Das heißt, die Verschraubung der Anschraubrahmen erfolgt zusammen mit der Trägerplatte. Denkbar ist aber auch, die Trägerplatte an dem mindestens einen Anschraubrahmen zu befestigen, zum Beispiel zu verschrauben, in jedem Fall entfallen zusätzliche Anbindungsmittel mit denen die Trägerplatte an der Stirnwand fixiert wird, insbesondere wird die Stirnwand insofern nicht durch zusätzliche Bohrungen zur Aufnahme von Schrauben geschwächt. Diese zuvor beschriebene Ausführungsform eröffnet darüber hinaus die Möglichkeit, solche Schalldämmmittel als Teile eines Komplettpakets mit dem Übergang oder dem Balg zu verkaufen.

Bei einer aufrollbaren Seitenwand als Innenverkleidung ist als Befestigungsmittel mindestens eine Befestigungskonsole vorgesehen, die ebenfalls zusammen mit der Trägerplatte an der Stirnwand verschraubt werden kann. Denkbar ist auch hier, die Trägerplatte mit der Befestigungskonsole zu verbinden und/oder mit dem Anschraubrahmen als Befestigungsmittel für die Außenverkleidung.

Anhand der Zeichnungen wird die Erfindung nachstehend beispielhaft näher erläutert.

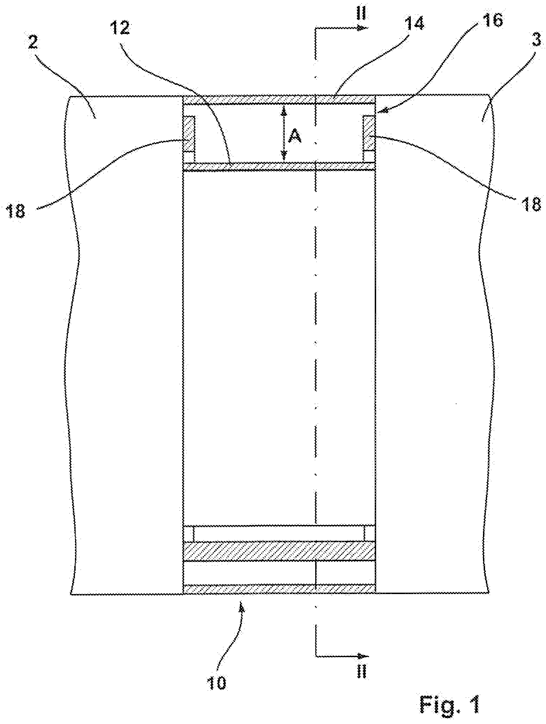

- Fig. 1: zeigt schematisch in einer Seitenansicht im Schnitt die Anordnung eines Obergangs zwischen zwei Fahrzeugen oder Fahrzeugteilen;
- Fig. 2: zeigt eine Ansicht gemäß der Linie II/II aus Fig. 1;
- Fig. 3: zeigt eine Variante zu Fig. 1 zu der Anordnung der Schalldämmschicht auf der Stirnseite der Fahrzeugteile.

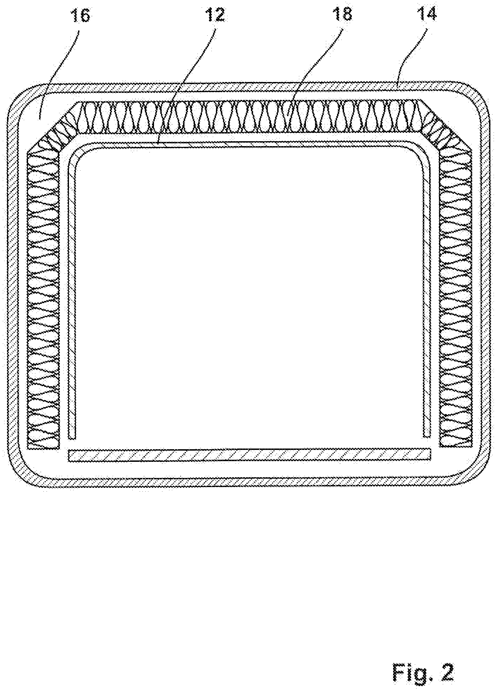

Zwischen den beiden Wagenkästen 2,3 der gelenkig miteinander verbundenen Fahrzeuge oder Fahrzeugteile befindet sich der insgesamt mit 10 bezeichnete Übergang. Der Übergang 10 umfasst eine Außenverkleidung 14 und eine Innenverkleidung 12, die unter Bildung eines Abstandes A zueinander zwischen den Stirnwänden der Wagenkästen 2 und 3 verlaufen und an den Stirnwänden befestigt sind. Die Außen- und die innenverkleidung 14, 12 können jeweils als Balg ausgebildet sind, zum Beispiel als Wellenbalg. Durch den Abstand A zwischen der Innenverkleidung 12 und der Außenverkleidung 14 wird eine Freifläche 16 auf der jeweiligen Stirnwand der Wagenkästen der gelenkig miteinander verbundenen Fahrzeuge oder Fahrzeugteile geschaffen, wobei auf der Freifläche 16 die Schalidämmschicht 18 angeordnet ist. Die Schalidämmschicht 18 erstreckt sich, wie sich diese insbesondere in Anschauung von Fig. 2 ergibt, im Wesentlichen U-förmig umlaufend zwischen der Innenverkleidung 12 und der Außenverkleidung 14. Die Schalldämmschicht 18, die insbesondere eine Stärke von etwa 5 cm aufweist, kann auf der Stirnwand der Wagenkästen 2, 3 aufgeklebt, aufgeschraubt oder auch genietet sein,

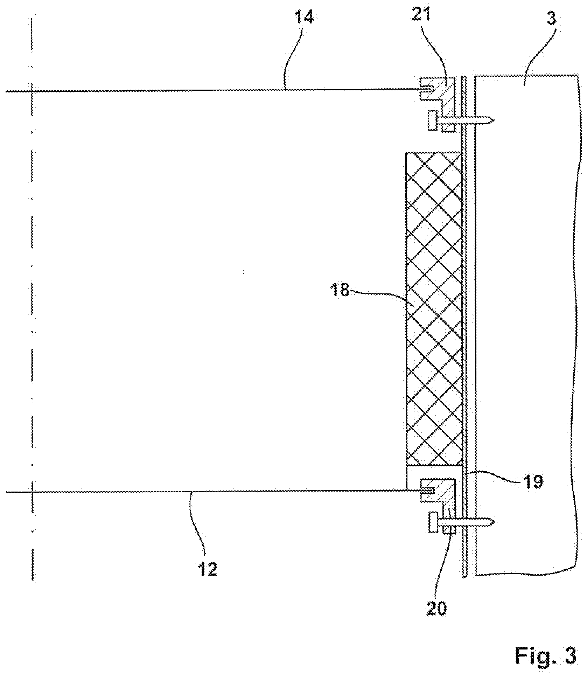

Bei der Darstellung gemäß Fig. 3 ist die Dämmschicht 18 auf einer Trägerplatte 19 zum Beispiel durch Kleben oder Verschrauben angeordnet. Die Trägerplatte 19 wird jeweils durch den Anschraubrahmen 20, 21 der Innen- und Außenverkleidung 12,14 erfasst, um die Anschraubrahmen 20, 21 zusammen mit der Trägerplatte 19 mit der Stirnwand des jeweiligen Fahrzeugs oder Fahrzeugteils zu verbinden. Die Trägerplatte 19 erstreckt sich somit über die Freifläche 16 bis in den Bereich der Anschraubrahmen 20, 21. Denkbar ist ebenfalls, die Trägerplatte 19 mit der Dämmschicht 18 unmittelbar mit den Anschraubrahmen 20, 21 zu verbinden.

### Bezugszeichenliste:

- 2: Wagenkasten
- 3: Wagenkasten
- 10: Übergang
- 12: Innenverkleidung
- 14: Außenverkleidung
- A: Abstand
- 16: Freifläche
- 18: Schalldämmschicht
- 19: Tragerplatte
- 20: Anschraubrahmen
- 21: Anschraubrahmen

## Patentansprüche

1. Aus mehreren gelenkig miteinander verbundenen Fahrzeugen oder Fahrzeugteilen (2,3) ausgebildetes Gelenkfahrzeug, zum Beispiel ein Schienenfahrzeug oder ein Gelenkbus, wobei zwischen den Fahrzeugen oder Fahrzeugteilen (2, 3) ein Übergang (10) angeordnet ist, wobei der Übergang eine innen- (12) sowie mit seitlichem Abstand dazu eine Außenverkleidung (14) aufweist, wobei innen- (12) und Außenverkleidung (14) unter Bildung des Abstandes (A) zueinander an den Stirnwänden zweier benachbarter Fahrzeuge oder Fahrzeugteile angeordnet sind,
**dadurch gekennzeichnet,**
**dass** auf der durch den Abstand (A) auf der Stimwand gebildeten Freifläche (16) eine schallabsorbierende Schalldämmschicht (18) aufgebracht ist.

2. Gelenkfahrzeug (1) nach Anspruch 1,
**dadurch gekennzeichnet,**
**dass** die Schalldämmschicht (18) als Vlies, als Schaumstoff oder ähnliches ausgebildet ist.

3. Gelenkfahrzeug (1) nach einem der voranstehenden Ansprüche,
**dadurch gekennzeichnet,**
**dass** die Schalldämmschicht (18) mattenartig ausgebildet ist.

4. Gelenkfahrzeug (1) nach einem der voranstehenden Ansprüche,
**dadurch gekennzeichnet,**
**dass** die Schalldämmschicht (18) mit der Stimwand des jeweiligen Wagenkastens der Fahrzeuge oder Fahrzeugteile (2, 3) verklebt, verschraubt oder vernietet ist.

5. Gelenkfahrzeug (1) nach einem der voranstehenden Ansprüche,
**dadurch gekennzeichnet,**
**dass** die innen- (12) und/oder Außenverkleidung (14) als Balg ausgebildet ist.

6. Gelenkfahrzeug (1) nach einem der voranstehenden Ansprüche,
**dadurch gekennzeichnet,**
**dass** die Innenverkleidung (12) mindestens eine biegsame und/oder aufrollbare Seitenwand aufweist.

7. Gelenkfahrzeug (1) nach einem der voranstehenden Ansprüche,
**dadurch gekennzeichnet,**
**dass** zwischen den verbundenen Fahrzeugen oder Fahrzeugteilen (2,3) keine zusätzlichen schalldämmenden und/oder schallabsorbierenden Materialien in dem Raum zwischen Innen- (12) und Außenverkleidung (14) des Übergangs (10) angeordnet sind.

8. Gelenkfahrzeug (1) nach einem der voranstehenden Ansprüche,
**dadurch gekennzeichnet,**
**dass** Außen- und Innenverkleidung an den Stirnwänden zweier benachbarter Fahrzeuge oder Fahrzeugteile durch Befestigungsmittel, zum Beispiel jeweils einen Anschraubrahmen (20,21) und/oder Befestigungskonsolen angeordnet sind.

9. Gelenkfahrzeug (1) nach Anspruch 8,
**dadurch gekennzeichnet,**
**dass** die Schalldämmschicht (18) auf einer Trägerplatte (19) angeordnet ist, die gemeinsam mit mindestens einem Befestigungsmittel, zum Beispiel einem Anschraubrahmen (20, 21) und/oder einer Befestigungskonsole an der Stirnwand des jeweiligen Fahrzeugs oder Fahrzeugteils (2, 3) befestigt ist.

## Claims

1. An articulated vehicle, for example a rail vehicle or an articulated bus, formed from a plurality of vehicles or vehicle parts (2, 3) connected to one another in an articulated manner, wherein a passage (10) is arranged between the vehicles or the vehicle parts (2, 3), wherein the passage has an inner lining (12) and an outer lining (14) at a lateral spacing therefrom, wherein the inner lining (12) and the outer lining (14) are arranged at the front walls of two adjacent vehicles or vehicle parts while forming the spacing (A) from one another,
**characterized in**
**that** a noise-absorbing noise insulation layer (18) is applied to the free surface (16) formed by the spacing (A) on the front wall.

2. The articulated vehicle (1) in accordance with claim 1,
**characterized in**
**that** the noise insulation layer (18) is formed as a mat, as a foam, or similar.

3. The articulated vehicle (1) in accordance with one of the preceding claims,
**characterized in**
**that** the noise insulation layer (18) is formed in mat-like form.

4. The articulated vehicle (1) in accordance with one of the preceding claims,
**characterized in**
**that** the noise insulation layer (18) is adhesively bonded, screwed, or riveted to the front wall of the respective coach body of the vehicles or vehicle parts (2, 3).

5. The articulated vehicle (1) in accordance with one of the preceding claims,
**characterized in**
**that** the inner lining (12) and/or outer lining (14) is/are formed as bellows.

6. The articulated vehicle (1) in accordance with one of the preceding claims,
**characterized in**
**that** the inner lining (12) has at least one flexible and/or rollable side wall.

7. The articulated vehicle (1) in accordance with one of the preceding claims,
**characterized in**
**that** between the connected vehicles or vehicle parts (2, 3) no additional noise insulating and/or noise absorbing materials are arranged in the space between the inner lining (12) and the outer lining (14) of the passage (10).

8. The articulated vehicle (1) in accordance with one of the preceding claims,
**characterized in**
**that** the outer lining and inner lining are arranged at the front walls of two adjacent vehicles or vehicle parts by fastening means, for example, by a respective screw-on frame (20, 21) and/or by fastening consoles.

9. The articulated vehicle (1) in accordance with claim 8,
**characterized in**
**that** the noise insulation layer (18) is arranged on a carrier plate (19) that is fastened together with at least one fastening means, for example, together with a screw-on frame (20, 21) and/or together with a fastening console, to the front wall of the respective vehicle or vehicle part (2, 3).

## Revendications

1. Véhicule articulé composé de plusieurs véhicules ou des parties de véhicule (2, 3) reliés de façon articulée, par exemple un véhicule ferroviaire ou un bus articulé, dans lequel un passage (10) est agencé entre les véhicules ou les parties de véhicule (2, 3), dans lequel le passage (10) présente un habillage intérieur (12) et un habillage extérieur (14) à espace latéral (A) de l'habillage intérieur, dans lequel l'habillage intérieur (12) et l'habillage extérieur (14) sont disposés sur les parois frontales de deux véhicules ou de parties de véhicule adjacents tout en formant l'espace (A) entre eux,
**caractérisé en ce**
**qu'**une couche d'isolation phonique (18) pour absorber le bruit est appliquée sur la surface libre (16) formée par l'espace (A) sur la paroi frontale.

2. Véhicule articulé (1) selon la revendication 1,
**caractérisé en ce**
**que** la couche d'isolation phonique (18) est formé comme non-tissé, comme mousse ou similaire.

3. Véhicule articulé (1) selon l'une quelconque des revendications précédentes,
**caractérisé en ce**
**que** la couche d'isolation phonique (18) est en forme de natte.

4. Véhicule articulé (1) selon l'une quelconque des revendications précédentes,
**caractérisé en ce**
**que** la couche d'isolation phonique (18) est collée, vissée ou rivée avec la paroi frontale de la caisse de véhicule respective des véhicules ou des parties de véhicule (2, 3).

5. Véhicule articulé (1) selon l'une quelconque des revendications précédentes,
**caractérisé en ce**
**que** l'habillage intérieur (12) et/ou l'habillage extérieur (14) est réalisé sous la forme d'un soufflet.

6. Véhicule articulé (1) selon l'une quelconque des revendications précédentes,
**caractérisé en ce**
**que** l'habillage intérieur (12) présente au moins une paroi latérale flexible et/ou enroulable.

7. Véhicule articulé (1) selon l'une quelconque des revendications précédentes,
**caractérisé en ce**
**qu'**entre les véhicules ou les parties de véhicule (2, 3) reliés aucun matériau supplémentaire insonorisant et/ou pour absorber le bruit est agencé dans l'espace entre l'habillage intérieur (12) et l'habillage extérieur (14) du passage (10).

8. Véhicule articulé (1) selon l'une quelconque des revendications précédentes,
**caractérisé en ce**
**que** l'habillage extérieur et l'habillage intérieur sont agencés aux parois frontales de deux véhicules ou des parties de véhicule adjacents par des moyens de fixation, par exemple un cadre vissable respectif (20, 21) et/ou des consoles de fixation.

9. Véhicule articulé (1) selon la revendication 8,
**caractérisé en ce**
**que** la couche d'isolation phonique (18) est agencée sur une plaque de support (19) qui est fixée ensemble avec au moins un moyen de fixation, par exemple un cadre vissable (20, 21) et/ou une console de fixation à la paroi frontale du véhicule respectif ou des parties de véhicule respectives (2, 3).
